# EUROPEAN PATENT SPECIFICATION

(11) **EP 2 078 940 B1**
(45) Date of publication and mention of the grant of the patent: **04.04.2018**
(21) Application number: 08254106.1
(22) Date of filing: 22.12.2008
(51) Int. Cl.: G01L 9/12, G01L 19/04

(54) **Combined fluid pressure and temperature sensor apparatus**
Kombinierte Flüssigkeitsdruck- und Flüssigkeitstemperatursensorvorrichtung
Capteur combiné de pression de fluide et de température

(30) Priority: 10.01.2008 US 20227; 11.12.2008 US 332401
(43) Date of publication of application: 15.07.2009
(73) Proprietor: Sensata Technologies, Inc., Attleboro, MA 02703-0964 (US)
(72) Inventor: Girroir, Jared E., Attleboro, MA 02703 (US); Moelders, Nicholas, Norton, MA 02766 (US)
(74) Representative: Abel & Imray

(56) References cited:
- EP-A2- 0 350 612
- US-A- 5 974 893

## Description

### Field of the Invention:

0001. This invention relates generally to condition responsive fluid sensors and more particularly to combined fluid pressure and temperature sensors.

### Background of the Invention:

0002. Fluid pressure responsive capacitive transducers comprising a variable capacitor mounted in a fluid chamber having a thin ceramic diaphragm exposed to the fluid so that a change in fluid pressure causes concomitant changes in the position of the diaphragm to thereby cause change in the capacitance of the capacitor are well known in the art. Transducers of this type are shown and described, for example, in U.S. Patent No. 4,71 6,492. In that patent, a thin ceramic diaphragm is shown mounted in closely spaced, sealed, overlying relation to a ceramic substrate. Metal coatings are deposited on opposing surfaces of the diaphragm and substrate to serve as capacitor plates arranged in predetermined closely spaced relation to each other to form a capacitor. Capacitor terminal pins having one end connected to the capacitor plates are mounted in bores extending through the substrate with opposite ends connected to signal conditioning circuitry disposed in an electric circuit chamber at an opposite face surface of the substrate. A connector body of electrical insulating material, received over the signal conditioning circuitry, mounts transducer terminals extending into the electric circuit chamber for connection to the signal conditioning circuitry. Capacitance is converted by the circuitry to an output voltage related to the fluid pressure. The capacitor is received in a suitable housing having a fluid receiving port and is provided with a fluid seal enabling the transducer to be used with fluid pressures up to 10,000 psi or higher.

0003. In certain applications it is desirable to measure temperature of fluid as well as pressure. A combined pressure responsive transducer and temperature sensor is shown and described in U.S. Patent No. 5,974, 893. In that patent a variable capacitor having a rigid substrate and a flexible diaphragm, each provided with a capacitor plate on a respective face surface, are attached to each other in aligned, overlying, spaced apart relation by a generally annular glass seal. The variable capacitor is disposed in a housing with the diaphragm exposed to fluid in a fluid pressure chamber of the housing that is in fluid communication with a fluid pressure receiving port of the housing. Electrical traces extend from the capacitor plates into an enclosed window in the glass seal for electrical connection with electrical pins extending through the substrate. A temperature responsive element is mounted for direct engagement with electrical leads that extend through an opening in the diaphragm near its outer periphery aligned with the glass seal.

0004. Temperature sensor pins extend through the substrate and are connected to respective connection pads. The other ends of the temperature sensor pins, as well as the electrical pins for the variable capacitor, are connected to signal conditioning circuitry provided in an electric circuit chamber formed between the housing and a connector body attached to the housing. In one embodiment a temperature responsive element such as a thick film thermistor is coated onto the exposed face of the diaphragm along with electrically conductive traces connected to the connection pads. Other embodiments have the thermistor disposed within a fluid receiving port of the housing or disposed beyond the port with or without a protective sheath.

Each of the above embodiments of the 5,974,893 patent have certain limitations. With respect to the embodiment having the thermistor coated onto the exposed face of the diaphragm, it is desirable to reduce the response time of the temperature sensor and to provide a temperature sensor that has enhanced environmental compatibility, that is, a sensor that has greater immunity to the corrosivity of the media to which it is exposed. With regard to mounting the thermistor so that it is disposed within the fluid receiving port or at a location beyond the port, it is desired to provide a combined fluid pressure and temperature responsive sensor that is less costly to manufacture, one that is easier to assemble as well as one that is more robust while still having a short response time.

EP 0350 612 discloses a fluid sensor having a diaphragm exposed to a pressure chamber holding a fluid to be measured. On the opposite side of the diaphragm are mounted a strain gauge to measure pressure and also a temperature sensor. Respective bores carry the fluid to be measured to and from a pipe in which the fluid generally flows from and to the pressure chamber.

### Summary of the Invention

It is therefore an object of the present invention to provide a low cost, robust pressure and temperature sensor having an improved short period of response. Another object of the invention is the provision of such a sensor particularly adapted to measure pressure in the 6.5 psia to 1,000 psia range, and temperature in the -40 degree C to 125 degree C range for fluid applications. Yet another object of the invention is the provision of such a sensor that has superior environmental compatibility.

0007. The present invention is defined in claim 1. Briefly, in accordance with the preferred embodiment of the invention, a combined pressure responsive transducer and temperature sensor comprises a housing having a fluid pressure receiving port in fluid communication with a fluid pressure chamber. A variable capacitor having a rigid substrate and a flexible diaphragm are each provided with a capacitor plate on a respective face surface with the diaphragm attached to and spaced from the substrate and with the capacitor plates facing each other in aligned, spaced apart relation in a gap formed by a generally annular glass seal. The variable capacitor is disposed in the housing with the diaphragm exposed to the fluid pressure chamber. Electrical traces extend from the capacitor plates for connection with electrical pins extending through the substrate.

0008. The opposite ends of the electrical pins are connected to signal conditioning circuitry disposed in an electric circuit chamber formed between the housing and the connector body which mounts transducer terminals also connected to the electric circuitry.

0009. A temperature responsive element is mounted on the face surface of the diaphragm exposed to the fluid pressure chamber. First and second electric traces are connected to the temperature responsive element and extend along the diaphragm surface to and through openings in the diaphragm near its outer periphery aligned with the glass seal. According to a feature of the preferred embodiment of the invention, the temperature responsive element is a discrete SMT NTC (negative temperature coefficient of resistivity) thermistor placed on the diaphragm surface along with the electric traces and with a thin layer of polymer disposed over the diaphragm, the temperature responsive element and the first and second electric traces. The first and second electric traces extend through the openings in the diaphragm and are connected to other electrical pins extending through the substrate.

0010. According to a further feature of the preferred embodiment, the temperature responsive element is positioned on the diaphragm so that it is aligned with the glass annular seal between the rigid substrate and the flexible diaphragm laterally beyond the active area of the diaphragm.

0011. The fluid pressure receiving port comprises an open tubular member in fluid communication with the fluid pressure chamber and formed with an external thread for convenient installation in a fluid media system. A fluid flow diffuser received in the port has longitudinally extending walls separating the internal space of the tubular member into a passageway having a plurality of paths, preferably four, leading from a location external to the housing to the fluid pressure chamber. The fluid flow diffuser paths are oriented so that at least one is upstream relative to the fluid flow and serves as a path bringing fluid flow up to the fluid pressure chamber and across the temperature responsive element and at least one that is downstream that serves as a return path bringing the fluid back to the fluid media source.

### Brief Description of the Drawings:

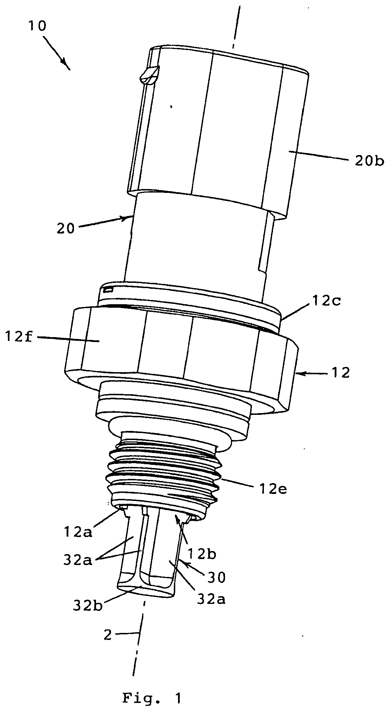

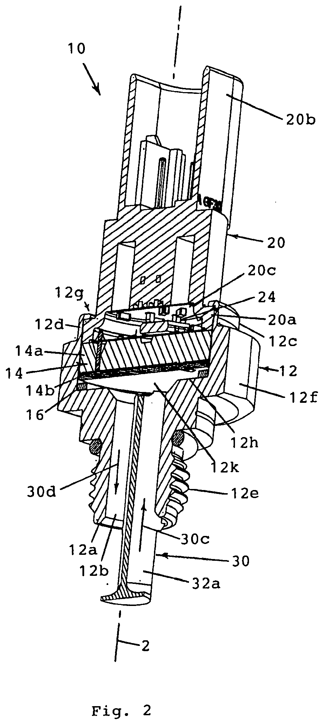

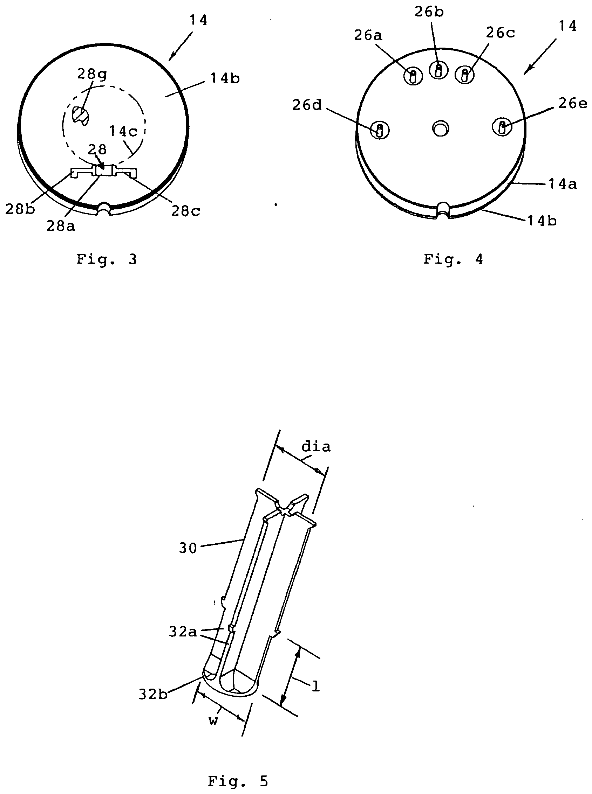

0012. Other objects, advantages and details of the novel and improved combined pressure and temperature sensor apparatus of the invention appear in the following detailed description of the preferred embodiment of the invention, the detailed description referring to the drawings in which:
0013. Fig. 1 is a perspective elevational view of a combined sensor made in accordance with the invention;
0014. Fig. 2 is a cross section of a perspective elevational view of the Fig. 1 sensor;
0015. Fig. 3 is a perspective view of the capacitive transducer used in the Fig. 1 structure and shows the face surface of the diaphragm with the temperature responsive element attached thereto;
0016. Fig. 4 is a perspective view similar to Fig. 3 but showing the opposite substrate face surface of the transducer showing the several electrical pins extending from that surface; and
0017. Fig. 5 is a perspective view of the diffuser used in the Figs. 1, 2 sensor.

### Detailed Description of the Preferred Embodiment

0018. Referring to Figs. 1 and 2 of the drawings, a combined fluid pressure and temperature sensor 10 made in accordance with the preferred embodiment of the invention comprises a housing 12 made of suitable material, such as zinc coated steel, having a first end 12a formed with a fluid receiving port 12b extending along a longitudinal axis 2 and an opposite second end 12c formed on the axis with an open end forming a chamber 12g defined by an attenuated tubular wall 12d for clamping engagement with a connector, to be discussed. Housing 12 is formed with an external thread 12e at the first end for coupling to a fluid pressure source to be monitored. Male polygonal surface 12f is formed on the housing intermediate to the first and second ends to facilitate the installation and removal of the sensor to and from a coupling member of the fluid pressure source.

0019. A variable capacitor 14 having a substrate portion 14a and a flexible diaphragm 14b attached to the substrate in spaced apart, sealed relation is received in chamber 12g of the housing with a fluid sealing gasket 16 of suitable material such as fluorosilicone forming a fluid pressure chamber 12k with a face surface of diaphragm 14b exposed to the fluid pressure chamber. Spacing of the ceramic sense element relative to the housing is controlled via the crimping process of tubular wall 12d to be discussed (control of force/displacement).

0020. An electrically insulative connector 20 has an end 20a formed with a radially outwardly extending circumferential flange received in the open end so that attenuated wall 12d of the housing can be deformed inwardly to clampingly engage the connector, as shown in Fig. 2. Connector 20 mounts, as by insert molding, a plurality of connector terminals 22 which extend from a location within a shroud 20b into a recessed electric circuit chamber 20c for electrical connection with signal conditioning circuit 24 such as that disclosed in U.S. Patent No. 4,982,351, and to which reference may be had for a description of the operation of the circuitry. The connector provides a convenient electrical interface to power the sensor and transmit the pressure and temperature signals to the monitoring system.

0021. With particular reference to Figs. 3 and 4, variable capacitor 14 comprises a generally circular, rigid, disc shaped member formed of suitable electrically insulative material, such as ceramic. Flexible diaphragm 14b, also a generally circular member preferably formed of the same material as substrate 14a and having a matching outer periphery is attached to substrate 14a in spaced apart relation, preferably by means of a glass seal pattern. Capacitor plates (not shown) of suitable electrically conductive material are disposed on facing surfaces of the substrate and diaphragm and are electrically connected, along with a conventional guard ring (not shown), to electrically conductive pins 26a, 26b, 26c, extending through the substrate into the glass seal area by suitable electric traces and conductive epoxy or the like shown and described in U.S. Patent No. 5,974,893, referenced above.

0022. As shown in Fig. 3, a temperature responsive sensor in the form of a thermistor 28a of suitable material such as a discrete SMT NTC (negative coefficient of resistivity) type, is attached to the face surface of diaphragm 14b that is exposed to the fluid pressure chamber. Preferably the thermistor is located at a position on the diaphragm that is laterally spaced from the active part of the diaphragm, that is, aligned with the peripheral glass seal as shown in Fig. 3, the inside diameter of the seal being indicated by dashed line 14c. First and second conductive traces or leads 28b, 28c, are also applied to the diaphragm's exposed face surface and extend from spaced apart portions of thermistor 28a to a location aligned with the glass seal pattern attaching the diaphragm and substrate together. At that location respective bores are formed to enable electrical connection between the leads and electrical pins 26d, 26e respectively by suitable means such as conductive epoxy. A thin layer of polymer (Teflon, polyamide or epoxy based) 28g is placed over the exposed face surface of the diaphragm, thermistor 28a and leads 28b, 28c, to protect the temperature sensor from the fluid media rendering the sensor insensitive to any corrosivity of the fluid media and without significant degradation of the response time of the temperature sensor or significant degradation of the sensitivity of the flexivity of the pressure sensor diaphragm. The thermistor 28a may also be formed of thick film, if desired. Further, the protective layer 28g may be formed of a thin layer of glass rather than polymer.

0023. A fluid flow diffuser 30 of suitable material, such as plastic or metal, is disposed in fluid receiving port 12b in order to improve fluid flow across the temperature responsive sensor to increase both the accuracy and the response time of the sensor. Fluid flow diffuser 30 comprises a fluid flow passage formed by longitudinally extending walls 32a that extend from the bottom wall 12h of the fluid pressure chamber down through the tubular port or coupling member to a location beyond first end 12a of the housing and forming a plurality of paths, preferably four, so that regardless of orientation in the fluid flow, at least one path will face the upstream side of the fluid flow while at least one other path will face the downstream side. An end wall 32b that lies in a plane generally perpendicular to the longitudinal axis, along with the opening of the port at 12b serve as an entrance to an upstream first path 30c (see arrows in Fig. 2) leading from a location outside the housing up to the fluid pressure chamber 12k and a downstream second path 30d leading from fluid pressure chamber 12k to a location outside the housing.

0024. Thus the provision of protective layer 28g allows the minimization of the thermal mass of the temperature sensor by obviating the need for a thick epoxy protective coating or the like and without concern of corrosivity of the fluid media. The provision of diffuser 30 results in optimum fluid flow of the media up to and across temperature sensor 28. These features provide faster response time of the temperature sensor with improved accuracy in a device that is robust and readily manufacturable.

0025. The sensor functionality at the high and low ends of a particular application, for example, a range of Reynolds numbers 500 to 10000, is extremely sensitive to the geometry of the diffuser and coupling in which it is located. At low flow rates, e.g., Re 500, temperature response is poor so ideally a large diffuser and opening should be provided to divert a large amount of fluid up into the fluid pressure chamber 12k. On the other hand, at high flow rates, e.g., Re 10000, pressure error due to the dynamic component of a dense flowing fluid requires a small diffuser for minimal flow disturbance. For the 500 - 10000 range of Reynolds numbers the optimum geometry of the sensor, with reference to Fig. 5, is as follows: port or tubular coupling inside diameter (dia) of 8mm, diffuser width (w) of 7 mm and diffuser length beyond the coupling (1) of 10 mm.

0026. For another application, for example, for a small engine with lower oil flow rates, different diffuser/coupling geometry would need to be employed for optimum results.

0027. The diffuser enables highly integrated temperature and pressure sensor technology independent of temperature sensor technology, i.e., NTC, PTC, RTD and the like, as well as pressure sensor technology, i.e., piezo-resistive, capacitive ceramic, piezo-resistive metal strain gauge. Minimization of the temperature sensor in conjunction with good thermal isolation provides improved temperature response time and good thermal accuracy in a device that is both reliable and robust.

0028. It should be understood that although a preferred embodiment has been described by way of illustrating the invention, the invention includes all modifications and equivalents of the disclosed embodiment falling within the scope of the invention. For example the flow diffuser is shown defining a passageway having straight paths leading to and from the fluid pressure chamber, the passage could also be formed so that the paths are curved, such as helical, if desired, as long as the fluid is caused to flow across the temperature responsive sensor. It is also within the purview of the invention to increase thermal isolation of the capacitive sensor 14 from housing 12 by providing thermal insulation between the capacitor and the side wall of housing 12 by a sleeve of thermal insulative material or by increasing the diameter of the chamber 12g and providing spacing fingers to position the capacitor. Further, it is also within the purview of the invention to use the flow diffuser with other technologies for temperature and pressure sensing, as noted in the above immediately preceding paragraph.

0029. Although the invention has been described with regards to a specific preferred embodiment thereof, variations and modifications will become apparent to those of ordinary skill in the art. It is therefore the intent that the appended claims be interpreted as broadly as possible in view of the prior art to include all such variations and modifications.

## Claims

1. Combined fluid pressure and temperature sensor apparatus (10) comprising:
a housing (12) forming a fluid pressure chamber (12k) and having a tubular coupling formed with an open end, the tubular coupling being connectable to a fluid pressure source and serving as a fluid receiving port,
a fluid pressure sensor having a relatively flexible diaphragm (14b) disposed in the housing with the flexible diaphragm exposed to the fluid pressure chamber,
a temperature responsive element (28a) disposed on said face surface of the diaphragm exposed to the fluid pressure chamber, the tubular coupling extending along a longitudinal axis (2),
circuit means (24) coupled to the capacitive fluid pressure sensor and temperature responsive element,
**characterized in that** the apparatus comprises a fluid flow diffuser passage disposed in the tubular coupling and having at least one first path (30c) leading from the open end of the tubular coupling to the fluid pressure chamber and at least one second path (30d) leading from the fluid pressure chamber to the open end of the tubular coupling whereby fluid is directed through the first path into engagement with and across the temperature responsive resistive element and back through the at least one second path, wherein the fluid flow diffuser (30) is formed by at least one longitudinally extending wall (32a) disposed in the tubular coupling separating the at least one first path from the at least one second path, and wherein the at least one longitudinally extending wall (32a) extends beyond the open end of the tubular coupling to a distal end, and the apparatus further comprises a wall (32b) lying in a plane generally normal to the longitudinal axis attached to the at least one longitudinally extending wall at the distal end.

2. Combined fluid pressure and temperature sensor apparatus according to claim 1 in which the temperature responsive element is a thermistor (28a).

3. Combined fluid pressure and temperature sensor apparatus according to claim 1 further comprising a thin protective layer of material (28g) disposed over the face surface of the diaphragm (14b) exposed to the fluid pressure chamber and said temperature responsive element.

4. Combined fluid pressure and temperature sensor apparatus according to claim 1 in which the tubular coupling has an internal diameter of approximately 8 mm and the longitudinally extending wall extends approximately 10 mm beyond the open end of the tubular coupling.

5. Combined fluid pressure and temperature sensor apparatus as claimed in claim 1 comprising:
the housing (12) having a longitudinal axis (2) and first and second ends disposed along the axis, the fluid receiving port disposed at the first end, the fluid pressure chamber (12k) formed in the housing with the port in fluid receiving communication therewith, a tubular wall formed at the second end of the housing forming the open end, the pressure sensor (10) having a substrate (14a) and the relatively flexible diaphragm (14b), each having an outer periphery, both the substrate and the diaphragm formed of electrically insulative material, the diaphragm disposed on the substrate and attached thereto by a glass seal therebetween located adjacent to the outer peripheries of the substrate and diaphragm, the fluid pressure sensor disposed in the sensor housing with a face surface of the diaphragm exposed to the fluid pressure chamber,
an electrically insulative connector body attached to the open end of the housing, an electric circuit chamber formed between the connector body and the substrate, a signal conditioning electric circuit (24) received in the electric circuit chamber, electric terminals mounted in the connector body extending into the electric circuit chamber and being connected to the signal conditioning electric circuit (24), electric pins extending through the substrate aligned with the glass seal and having one end electrically connected to the signal conditioning circuit, the other end of the at least some pins electrically connected to the pressure sensor,
first and second leads electrically attached to spaced portions of the element formed on the said face surface of the diaphragm (14b), the first and second leads extending through the diaphragm and being electrically connected to other respective electric pins extending through the substrate,
the fluid pressure receiving port having a longitudinally extending tubular portion extending from the first end of the housing and being formed with a fluid flow diffuser (30), the fluid flow diffuser having the at least one first path (30c) leading from the first end to the fluid pressure chamber and the at least one second path (30d) leading from the fluid pressure chamber to the first end of the housing whereby fluid is directed through the at least one path into engagement with the temperature responsive resistive element and back through the at least one second path.

6. Combined fluid pressure and temperature sensor apparatus according to claim 5 further comprising a protective layer (28g) of corrosion resistant material over said face surface of the diaphragm exposed to the fluid pressure chamber, said temperature responsive element and said first and second leads.

7. Combined fluid pressure and temperature sensor apparatus according to claim 6 in which the corrosion resistant material (28g) is glass.

8. Combined fluid pressure and temperature sensor apparatus according to claim 6 in which the corrosion resistant material (28g) is a polymer.

9. Combined fluid pressure and temperature sensor apparatus according to claim 5 in which said longitudinally extending portion includes at least one longitudinally extending wall (32a) disposed within said tubular portion to form the first and second path.

10. Combined fluid pressure and temperature sensor apparatus according to claim 9 in which the at least one longitudinally extending wall (32a) extends beyond the tubular portion of the fluid pressure receiving port.

11. Combined fluid pressure and temperature sensor apparatus according to claim 5 in which the temperature sensor (28a) is aligned with the glass seal between the substrate and the diaphragm.

12. Combined fluid pressure and temperature sensor apparatus according to claim 10 particularly for use with fluids having a Reynolds number in a range between 500 and 10000 in which said longitudinally extending portion is a generally tubular portion having four longitudinally extending paths, the inside diameter of the tubular portion being approximately 8 mm, the at least one longitudinally extending wall extending beyond the tubular portion by approximately 10 mm and the width of the diffuser being approximately 7 mm.

13. Combined fluid pressure and temperature sensor apparatus according to claim 5 in which the temperature responsive element (28a) is a coating of thermistor material.

## Patentansprüche

1. Kombinierte Fluiddruck- und Fluidtemperatur-Sensorvorrichtung (10), umfassend:
ein Gehäuse (12), das eine Fluiddruckkammer (12k) bildet und ein mit einem offenen Ende gebildetes rohrförmiges Verbindungsstück aufweist, wobei das rohrförmige Verbindungsstück mit einer Fluiddruckquelle verbindbar ist und als Fluidaufnahmeanschluss dient,
einen Fluiddrucksensor, der eine relativ biegsame, im Gehäuse angeordnete Membran (14b) aufweist, wobei die biegsame Membran der Fluiddruckkammer ausgesetzt ist,
ein temperaturempfindliches Element (28a), das auf der der Fluiddruckkammer ausgesetzten Stirnseite der Membran angeordnet ist, wobei sich das rohrförmige Verbindungsstück entlang einer Längsachse (2) erstreckt,
mit dem kapazitiven Fluiddrucksensor und dem temperaturempfindlichen Element verbundene Schaltungsmittel (24),
**dadurch gekennzeichnet, dass** die Vorrichtung einen Fluidstrom-Verteilerkanal umfasst, der im rohrförmigen Verbindungsstück angeordnet ist und mindestens einen ersten Pfad (30c), der vom offenen Ende des rohrförmigen Verbindungsstücks bis zur Fluiddruckkammer führt, und mindestens einen zweiten Pfad (30d) aufweist, der von der Fluiddruckkammer bis zum offenen Ende des rohrförmigen Verbindungsstücks führt, wodurch Fluid durch den ersten Pfad in Wirkkontakt mit dem und über das temperaturempfindliche Widerstandselement und zurück durch den mindestens einen zweiten Pfad geführt wird, wobei der Fluidstromverteiler (30) durch mindestens eine sich in Längsrichtung erstreckende Wand (32a) gebildet ist, die im rohrförmigen Verbindungsstück angeordnet ist und den mindestens einen ersten Pfad vom mindestens einen zweiten Pfad trennt, und wobei die mindestens eine sich in Längsrichtung erstreckende Wand (32a) sich über das offene Ende des rohrförmigen Verbindungsstücks hinaus bis zu einem distalen Ende erstreckt, und dass die Vorrichtung ferner eine Wand (32b) umfasst, die in einer allgemein senkrecht zur Längsachse verlaufenden Ebene liegt und am distalen Ende an der mindestens einen sich in Längsrichtung erstreckenden Wand befestigt ist.

2. Kombinierte Fluiddruck- und Fluidtemperatur-Sensorvorrichtung nach Anspruch 1, wobei es sich beim temperaturempfindlichen Element um einen Thermistor (28a) handelt.

3. Kombinierte Fluiddruck- und Fluidtemperatur-Sensorvorrichtung nach Anspruch 1, ferner umfassend eine dünne Schutzschicht aus einem Material (28g), das über die der Fluiddruckkammer ausgesetzte Stirnseite der Membran (14b) und das temperaturempfindliche Element angeordnet ist.

4. Kombinierte Fluiddruck- und Fluidtemperatur-Sensorvorrichtung nach Anspruch 1, wobei das rohrförmige Verbindungsstück einen Innendurchmesser von ungefähr 8 mm aufweist und die sich in Längsrichtung erstreckende Wand sich ungefähr 10 mm über das offene Ende des rohrförmigen Verbindungsstücks hinaus erstreckt.

5. Kombinierte Fluiddruck- und Fluidtemperatur-Sensorvorrichtung nach Anspruch 1, umfassend:
das Gehäuse (12), welches eine Längsachse (2) sowie ein erstes und ein zweites entlang der Achse angeordnetes Ende aufweist, wobei der Fluidaufnahmeanschluss am ersten Ende angeordnet ist, wobei die Fluiddruckkammer (12k) im Gehäuse gebildet ist und der Anschluss mit dieser in Fluidaufnahmeverbindung steht, wobei eine am zweiten Ende des Gehäuses gebildete rohrförmige Wand das offene Ende bildet, wobei der Drucksensor (10) ein Substrat (14a) und die relativ biegsame Membran (14b) aufweist, welche jeweils einen Außenrand aufweisen, wobei sowohl das Substrat als auch die Membran aus elektrisch isolierendem Material gebildet sind, wobei die Membran auf dem Substrat angeordnet und an diesem durch eine Glasdichtung befestigt ist, die zwischen diesen an die Außenränder des Substrats und der Membran angrenzend angeordnet ist, wobei der Fluiddrucksensor so im Sensorgehäuse angeordnet ist, dass eine Stirnseite der Membran der Fluiddruckkammer ausgesetzt ist,
einen am offenen Ende des Gehäuses befestigten, elektrisch isolierenden Anschlusskörper, wobei zwischen dem Anschlusskörper und dem Substrat eine Schaltungskammer gebildet ist, wobei in der Schaltungskammer eine Auswertschaltung (24) aufgenommen ist, wobei im Anschlusskörper verbaute elektrische Anschlüsse sich in die Schaltungskammer erstrecken und mit der Auswertschaltung (24) verbunden sind, wobei sich Kontaktstifte durch das mit der Glasdichtung ausgerichtete Substrat erstrecken und deren eines Ende elektrisch mit der Auswertschaltung und das andere Ende zumindest einiger Stifte elektrisch mit dem Drucksensor verbunden ist,
eine erste und eine zweite Leitung, die beabstandete Abschnitte des auf der Stirnfläche der Membran (14b) gebildeten Elements elektrisch kontaktieren, wobei sich die erste und die zweite Leitung durch die Membran erstrecken und jeweils mit weiteren sich durch das Substrat erstreckenden Kontaktstiften elektrisch verbunden sind,
den Fluiddruckaufnahmeanschluss, welcher einen sich in Längsrichtung erstreckenden rohrförmigen Abschnitt aufweist, der sich vom ersten Ende des Gehäuses aus erstreckt und mit einem Fluidstromverteiler (30) gebildet ist, wobei der Fluidstromverteiler den mindestens einen ersten Pfad (30c), der vom ersten Ende bis zur Fluiddruckkammer führt, und den mindestens einen zweiten Pfad (30d) aufweist, der von der Fluiddruckkammer bis zum ersten Ende des Gehäuses führt, wodurch Fluid durch den mindestens einen Pfad in Wirkkontakt mit dem temperaturempfindlichen Widerstandselement und zurück durch den mindestens einen zweiten Pfad geführt wird.

6. Kombinierte Fluiddruck- und Fluidtemperatur-Sensorvorrichtung nach Anspruch 5, ferner umfassend eine Schutzschicht (28g) aus korrosionsbeständigem Material über der der Fluiddruckkammer ausgesetzten Stirnseite der Membran, dem temperaturempfindlichen Element und der ersten und der zweiten Leitung.

7. Kombinierte Fluiddruck- und Fluidtemperatur-Sensorvorrichtung nach Anspruch 6, wobei es sich beim korrosionsbeständigen Material (28g) um Glas handelt.

8. Kombinierte Fluiddruck- und Fluidtemperatur-Sensorvorrichtung nach Anspruch 6, wobei es sich beim korrosionsbeständigen Material (28g) um ein Polymer handelt.

9. Kombinierte Fluiddruck- und Fluidtemperatur-Sensorvorrichtung nach Anspruch 5, wobei der sich in Längsrichtung erstreckende Abschnitt mindestens eine sich in Längsrichtung erstreckende Wand (32a) enthält, die innerhalb des rohrförmigen Abschnitts angeordnet ist, um den ersten und zweiten Pfad zu bilden.

10. Kombinierte Fluiddruck- und Fluidtemperatur-Sensorvorrichtung nach Anspruch 9, wobei die mindestens eine sich in Längsrichtung erstreckende Wand (32a) sich über den rohrförmigen Abschnitt des Fluiddruckaufnahmeanschlusses hinaus erstreckt.

11. Kombinierte Fluiddruck- und Fluidtemperatur-Sensorvorrichtung nach Anspruch 5, wobei der Temperatursensor (28a) mit der Glasdichtung zwischen dem Substrat und der Membran ausgerichtet ist.

12. Kombinierte Fluiddruck- und Fluidtemperatur-Sensorvorrichtung nach Anspruch 10, insbesondere zur Verwendung mit Fluiden mit einer Reynolds-Zahl im Bereich zwischen 500 und 10.000, wobei es sich beim sich in Längsrichtung erstreckenden Abschnitt um einen allgemein rohrförmigen Abschnitt handelt, der vier sich in Längsrichtung erstreckende Pfade aufweist, wobei der Innendurchmesser des rohrförmigen Abschnitts ungefähr 8 mm beträgt, die mindestens eine sich in Längsrichtung erstreckende Wand sich um ungefähr 10 mm über den rohrförmigen Abschnitt hinaus erstreckt und die Breite des Verteilers ungefähr 7 mm beträgt.

13. Kombinierte Fluiddruck- und Fluidtemperatur-Sensorvorrichtung nach Anspruch 5, wobei es sich beim temperaturempfindlichen Element (28a) um eine Beschichtung aus einem Material mit Thermistoreigenschaften handelt.

## Revendications

1. Appareil capteur combiné de pression et de température d'un fluide (10), comprenant :
un logement (12) qui constitue une chambre de pression du fluide (12k) et qui présente un accouplement tubulaire formé avec une extrémité ouverte, l'accouplement tubulaire pouvant être connecté à une source de pression du fluide et servant d'orifice de réception du fluide ;
un capteur de pression du fluide qui présente un diaphragme relativement souple (14b) disposé dans le logement, le diaphragme souple étant exposé à la chambre de pression du fluide ;
un élément sensible à la température (28a) disposé sur ladite surface de face du diaphragme exposée à la chambre de pression du fluide, l'accouplement tubulaire s'étendant le long d'un axe longitudinal (2) ;
des moyens formant circuit (24) couplés au capteur de pression capacitif du fluide et à l'élément sensible à la température ;
**caractérisé en ce que** l'appareil comprend :
un passage diffuseur d'écoulement du fluide disposé dans l'accouplement tubulaire, et qui présente au moins un premier chemin (30c) qui conduit de l'extrémité ouverte de l'accouplement tubulaire à la chambre de pression du fluide, et au moins un second chemin (30d) qui conduit de la chambre de pression du fluide à l'extrémité ouverte de l'accouplement tubulaire, grâce à quoi le fluide est dirigé à travers le premier chemin dans une mise en prise avec et à travers l'élément résistif sensible à la température, et retourne à travers le ou les seconds chemins, dans lequel le diffuseur d'écoulement du fluide (30) est constitué par une paroi au moins qui s'étend de manière longitudinale (32a), disposée dans l'accouplement tubulaire, qui sépare le ou les premiers chemins du ou des seconds chemins, et dans lequel la ou les parois qui s'étendent de manière longitudinale (32a), s'étendent au-delà de l'extrémité ouverte de l'accouplement tubulaire vers une extrémité distale, et l'appareil comprend en outre une paroi (32b) qui se situe dans un plan perpendiculaire en général à l'axe longitudinal, fixée sur la ou les parois qui s'étendent de manière longitudinale au niveau de l'extrémité distale.

2. Appareil capteur combiné de pression et de température d'un fluide selon la revendication 1, dans lequel l'élément sensible à la température est un thermisteur (28a).

3. Appareil capteur combiné de pression et de température d'un fluide selon la revendication 1, comprenant en outre une fine couche protectrice de matériau (28g) disposée sur la surface de face du diaphragme (14b) exposée à la chambre de pression du fluide, et sur ledit élément sensible à la température.

4. Appareil capteur combiné de pression et de température d'un fluide selon la revendication 1, dans lequel l'accouplement tubulaire présente un diamètre intérieur approximativement égal à 8 mm, et la paroi qui s'étend de manière longitudinale s'étend approximativement de 10 mm au-delà de l'extrémité ouverte de l'accouplement tubulaire.

5. Appareil capteur combiné de pression et de température d'un fluide selon la revendication 1, comprenant :
le logement (12) qui présente un axe longitudinal (2) et des première et seconde extrémités disposées le long de l'axe, l'orifice de réception du fluide disposé au niveau de la première extrémité, la chambre de pression du fluide (12k) formée dans le logement, l'orifice étant en communication de réception du fluide avec celle-ci, une paroi tubulaire formée au niveau de la seconde extrémité du logement, qui forme l'extrémité ouverte, le capteur de pression (10) qui présente un substrat (14a) et le diaphragme relativement souple (14b), chacun présentant une périphérie extérieure, le substrat et le diaphragme étant réalisés dans un matériau isolant de manière électrique, le diaphragme étant disposé sur le substrat et fixé sur celui-ci par un joint d'étanchéité en verre qui se situe entre eux, adjacent aux périphéries extérieures du substrat et du diaphragme, le capteur de pression du fluide étant disposé dans le logement de capteur, une surface de face du diaphragme étant exposée à la chambre de pression du fluide ;
un corps de connecteur isolant de manière électrique fixé sur l'extrémité ouverte du logement, une chambre de circuit électrique formée entre le corps de connecteur et le substrat, un circuit électrique de traitement des signaux (24) reçu dans la chambre de circuit électrique, des bornes électriques montées dans le corps de connecteur, qui s'étendent dans la chambre de circuit électrique, et qui sont connectées au circuit électrique de traitement des signaux (24), des broches électriques qui s'étendent à travers le substrat, alignées avec le joint d'étanchéité en verre, et qui présentent une extrémité connectée de manière électrique au circuit de traitement des signaux, l'autre extrémité de certaines broches au moins étant connectée de manière électrique au capteur de pression ;
des premier et second conducteurs fixés de manière électrique sur des parties espacées de l'élément formé sur ladite surface de face du diaphragme (14b), les premier et second conducteurs s'étendant à travers le diaphragme, et étant connectés de manière électrique aux autres broches électriques respectives qui s'étendent à travers le substrat ;
l'orifice de réception de la pression du fluide présentant une partie tubulaire qui s'étend de manière longitudinale à partir de la première extrémité du logement, et qui est formée avec un diffuseur d'écoulement du fluide (30), le diffuseur d'écoulement du fluide présentant le ou les premiers chemins (30c) qui conduisent de la première extrémité à la chambre de pression du fluide, et le ou les seconds chemins (30d) qui conduisent de la chambre de pression du fluide à la première extrémité du logement, grâce à quoi le fluide est dirigé à travers le ou les chemins dans une mise en prise avec l'élément résistif sensible à la température, et retourne à travers le ou les seconds chemins.

6. Appareil capteur combiné de pression et de température d'un fluide selon la revendication 5, comprenant en outre une couche protectrice (28g) réalisée dans un matériau qui résiste à la corrosion, disposée sur ladite surface de face du diaphragme exposée à la chambre de pression du fluide, sur ledit élément sensible à la température et sur lesdits premier et second conducteurs.

7. Appareil capteur combiné de pression et de température d'un fluide selon la revendication 6, dans lequel le matériau qui résiste à la corrosion (28g) est du verre.

8. Appareil capteur combiné de pression et de température d'un fluide selon la revendication 6, dans lequel le matériau qui résiste à la corrosion (28g) est un polymère.

9. Appareil capteur combiné de pression et de température d'un fluide selon la revendication 5, dans lequel ladite partie qui s'étend de manière longitudinale, comprend au moins une paroi qui s'étend de manière longitudinale (32a) disposée à l'intérieur de la partie tubulaire de façon à former les premier et second chemins.

10. Appareil capteur combiné de pression et de température d'un fluide selon la revendication 9, dans lequel la ou les parois qui s'étendent de manière longitudinale (32a), s'étendent au-delà de la partie tubulaire de l'orifice de réception de la pression du fluide.

11. Appareil capteur combiné de pression et de température d'un fluide selon la revendication 5, dans lequel le capteur de température (28a) est aligné avec le joint d'étanchéité en verre entre le substrat et le diaphragme.

12. Appareil capteur combiné de pression et de température d'un fluide selon la revendication 10, destiné en particulier à une utilisation avec des fluides qui présentent un nombre de Reynolds qui se situe dans une plage comprise entre 500 et 10000, dans lequel ladite partie qui s'étend de manière longitudinale est une partie en général tubulaire qui présente quatre chemins qui s'étendent de manière longitudinale, le diamètre intérieur de la partie tubulaire étant approximativement égal à 8 mm, la ou les parois qui s'étendent de manière longitudinale s'étendant au-delà de la partie tubulaire de 10 mm environ, et la largeur du diffuseur étant approximativement égale à 7 mm.

13. Appareil capteur combiné de pression et de température d'un fluide selon la revendication 5, dans lequel l'élément sensible à la température (28a) est un revêtement d'un matériau thermisteur.
